(19) Europäisches Patentamt
European Patent Office
Office européen des brevets

(11) **EP 3 633 008 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **19204665.4**

(22) Anmeldetag: **04.03.2011**

(51) Internationale Patentklassifikation (IPC):
**C09K 8/584** *(2006.01)*     **C11D 1/06** *(2006.01)*
**C11D 1/29** *(2006.01)*     **C11D 1/34** *(2006.01)*

(52) Gemeinsame Patentklassifikation (CPC):
**C09K 8/584**

(54) **WÄSSRIGE TENSIDFORMULIERUNGEN FÜR VERFAHREN ZUR ERDÖLFÖRDERUNG UNTER VERWENDUNG VON TENSIDEN AUF BASIS VON C16C18-HALTIGEN ALKYLPROPOXYTENSIDEN**

AQUEOUS SURFACTANT FORMULATIONS FOR PETROLEUM TRANSPORT METHODS USING SURFACTANTS ON THE BASIS OF ALKYL PROPOXYTENSIDES CONTAINING C16C18

FORMULATIONS TENSIOACTIVES AQUEUSES POUR PROCÉDÉS DE TRANSPORT DE PÉTROLE À L'AIDE DES TENSIOACTIFS À BASE DE TENSIOACTIFS ALKYLPROPOXYLÉS CONTENANT C16C18

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2010   EP 10002492**

(43) Veröffentlichungstag der Anmeldung:
**08.04.2020   Patentblatt 2020/15**

(62) Dokumentnummer(n) der früheren Anmeldung(en) nach Art. 76 EPÜ:
**11708447.5 / 2 545 137**

(73) Patentinhaber: **BASF SE**
**67056 Ludwigshafen am Rhein (DE)**

(72) Erfinder:
• **Bittner, Christian**
  **64625 Bensheim (DE)**
• **Oetter, Günter**
  **67227 Frankenthal (DE)**
• **Tinsley, Jack**
  **Katy, TX 77450 (US)**
• **Spindler, Christian**
  **Houston, TX 77062 (US)**
• **Alvarez Jürgenson, Gabriela**
  **68165 Mannheim (DE)**
• **Maitro-Vogel, Sophie**
  **68199 Mannheim (DE)**
• **Wloka, Veronika**
  **67133 Maxdorf (DE)**
• **Guzmann, Marcus**
  **69242 Mühlhausen (DE)**

(56) Entgegenhaltungen:
EP-A2- 0 207 312     WO-A1-2011/045254
GB-A- 2 054 635     GB-A- 2 169 894
US-A- 3 843 706     US-A- 4 265 264
US-A- 4 395 364     US-A- 4 485 873
US-A- 4 842 067     US-A- 4 886 120

**Beschreibung**

Die Erfindung betrifft eine wässrige Tensidformulierung, die mindestens ein ionisches Tensid der allgemeinen Formel $R^1$-O-$(CH_2CH(CH_3)O)_m(CH_2CH_2O)_n$-XY⁻ M⁺ umfasst.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur etwa 1 μm aufweisen. Neben Erdöl, inklusive Anteilen von Erdgas, enthält eine Lagerstätte mehr oder weniger stark salzhaltiges Wasser.

Bei der Erdölförderung unterscheidet man allgemein zwischen der primären, sekundären und tertiären Förderung. Bei der primären Förderung strömt das Erdöl nach dem Anbohren der Lagerstätte aufgrund des Eigendrucks der Lagerstätte von selbst durch das Bohrloch an die Oberfläche.

Nach der primären Förderung kommt daher die sekundäre Förderung zum Einsatz. Bei der sekundären Förderung werden zusätzlich zu den Bohrlöchern, welche der Förderung des Erdöls dienen, den so genannten Produktionsbohrungen, weitere Bohrlöcher in die erdölführende Formation gebohrt. Durch diese so genannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in die Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich hergeschoben wird. Sobald das dünnflüssige Wasser durch Hohlräume durchbricht, strömt es ab diesem Zeitpunkt auf dem Weg des geringsten Widerstands, also durch den gebildeten Kanal, und schiebt nicht mehr das Öl vor sich her.

Mittels primärer und sekundärer Förderung sind im Regelfall nur ca. 30 - 35% der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung befindet sich beispielsweise im "Journal of Petroleum Science of Engineering 19 (1998)", Seite 265 bis 280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können ebenfalls Gase wie $CO_2$ oder Stickstoff Einsatz finden.

Zur tertiären Erdölförderung gehören weiterhin Verfahren bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinsformation festgehaltenes Erdöl fördern.

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslosen Parameters, der sogenannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N_c = \frac{\mu v}{\sigma \cos\theta} \ .$$

Dabei bedeutet μ die Viskosität des Erdöl mobilisierenden Fluids, v die Darcy-Geschwindigkeit (Durchfluss pro Flächeneinheit), σ die Grenzflächenspannung zwischen Erdöl mobilisierender Flüssigkeit und Erdöl und θ der Kontaktwinkel zwischen Erdöl und dem Gestein (C. Melrose, C.F. Brandner, J. Canadian Petr. Techn. 58, Oct. - Dez., 1974). Je höher die Kapillarzahl, desto größer die Mobilisierung des Öls und somit auch der Entölungsgrad.

Es ist bekannt, dass die Kapillarzahl gegen Ende der sekundären Erdölförderung im Bereich von etwa $10^{-6}$ liegt und dass es notwendig ist, die Kapillarzahl auf etwa $10^{-3}$ bis $10^{-2}$ zu erhöhen, um zusätzliches Erdöl mobilisieren zu können.

Hierzu kann man eine besondere Form des Flutverfahrens - das so genannte Winsor Typ III Mikroemulsionsfluten - durchführen. Beim Winsor Typ III Mikroemulsionsfluten sollen die injizierten Tenside mit der in der Lagerstätte vorhandenen Wasser- und der Ölphase eine Mikroemulsion Windsor Typ III ausbilden. Bei einer Mikroemulsion Windsor Typ III handelt es sich nicht um eine Emulsion mit besonders kleinen Tröpfchen, sondern um eine thermodynamisch stabile, flüssige Mischung von Wasser, Öl und Tensiden. Ihre drei Vorteile sind, dass

-   dadurch eine sehr niedrige Grenzflächenspannung σ zwischen Erdöl und wässriger Phase erreicht wird,

-   sie in der Regel eine sehr niedrige Viskosität aufweist und dadurch nicht in einer porösen Matrix gefangen wird,

- sie schon bei kleinsten Energieeinträgen entsteht und über einen unendlich langen Zeitraum stabil bleiben kann (klassische Emulsionen benötigen hingegen höhere Scherkräfte, welche im Reservoir überwiegend nicht auftauchen, und sind nur kinetisch stabilisiert).

Die Mikroemulsion Winsor-Typ III steht mit überschüssigem Wasser und überschüssigem Öl im Gleichgewicht. Unter diesen Bedingungen der Mikroemulsionsausbildung belegen die Tenside die Öl-Wasser-Grenzfläche und erniedrigen die Grenzflächenspannung $\sigma$ besonders bevorzugt auf Werte von $< 10^{-2}$ mN/m (ultralow interfacial tension). Um ein optimales Ergebnis zu erzielen, sollte der Anteil der Mikroemulsion im System Wasser-Mikroemulsion-Öl bei definierter Tensidmenge naturgemäß möglichst groß sein, da dadurch umso niedrigere Grenzflächenspannungen erzielt werden können. Auf diese Art und Weise lassen sich die Öltröpfchen in ihrer Form verändern (Grenzflächenspannung zwischen Öl und Wasser ist soweit abgesenkt, dass nicht mehr der Zustand der kleinsten Grenzfläche angestrebt wird und nicht mehr die Kugelform bevorzugt ist) und durch das Flutwasser durch die Kapillaröffnungen hindurchzwängen.

Sind alle Öl-Wasser-Grenzflächen mit Tensid belegt, bildet sich beim Vorliegen von überschüssiger Tensidmenge die Mikroemulsion Winsor Typ III aus. Sie stellt somit ein Reservoir für Tenside dar, welche eine sehr niedrige Grenzflächenspannung zwischen Öl- und Wasserphase bewerkstelligen. Dadurch dass die Mikroemulsion Winsor Typ III niederviskos ist, wandert sie im Flutprozess mit durch das poröse Lagerstättengestein (Emulsionen hingegen können in der porösen Matrix hängen bleiben und Lagerstätten verstopfen). Trifft die Mikroemulsion Winsor Typ III auf eine noch nicht mit Tensid bedeckte Öl-Wasser-Grenzfläche, so kann das Tensid aus der Mikroemulsion die Grenzflächenspannung dieser neuen Grenzfläche deutlich herabsetzen und zu einer Mobilisierung des Öles (zum Beispiel per Verformung der Öltropfen) führen.

Die Öltröpfchen können sich anschließend zu einer kontinuierlichen Ölbank vereinigen. Dies hat zweierlei Vorteile:

Zum einen können beim Voranschreiten der kontinuierlichen Ölbank durch neues poröses Gestein die sich dort befindlichen Öltröpfchen mit der Bank verschmelzen. Weiterhin wird durch die Vereinigung der Öltropfen zu einer Ölbank die Öl-Wasser-Grenzfläche deutlich verringert und somit nicht mehr benötigtes Tensid wieder freigesetzt. Das freigesetzte Tensid kann danach wie oben beschrieben in der Formation verbliebene Öltropfen mobilisieren.

Beim Winsor Typ III Mikroemulsionsfluten handelt es sich folglich um ein äußerst effizientes Verfahren und im Unterschied zu einem Emulsionsflutverfahren bedarf es deutlich weniger Tensid. Beim Winsor Typ III Mikroemulsionfluten werden üblicherweise die Tenside wahlweise zusammen mit Cosolventien und/oder basischen Salzen (optional in Gegenwart von Chelatbildnern) injiziert. Nachfolgend wird eine Lösung aus verdickendem Polymer zur Mobilitätskontrolle injiziert. Eine weitere Variante ist die Injektion einer Mischung aus verdickendem Polymer sowie Tensiden, Cosolventien und/oder basischen Salzen (optional mit Chelatbildner) und nachfolgend eine Lösung aus verdickendem Polymer zur Mobilitätskontrolle. Diese Lösungen sollten in der Regel klar sein, um Verstopfungen des Reservoirs zu vermeiden.

Die Anforderungen an Tenside für die tertiäre Erdölförderung unterscheiden sich deutlich von Anforderungen an Tenside für andere Anwendungen: Geeignete Tenside für die tertiäre Ölförderung soll die Grenzflächenspannung zwischen Wasser und Öl (üblicherweise ca. 20 mN/m) auf besonders niedrige Werte von weniger als $10^{-2}$ mN/m reduzieren, um eine ausreichende Mobilisierung des Erdöls zu ermöglichen. Dies muss bei den üblichen Lagerstättentemperaturen von ca. 15°C bis 130°C und in Gegenwart von stark salzhaltigem Wasser, insbesondere auch in Gegenwart von hohen Anteilen von Kalzium- und/oder Magnesiumionen erfolgen; die Tenside müssen also auch in stark salzhaltigem Lagerstättenwasser löslich sein.

Zum Erfüllen dieser Anforderungen sind bereits häufig Mischungen von Tensiden vorgeschlagen worden, insbesondere Mischungen aus anionischen und nicht ionischen Tensiden.

US 5,849,960 offenbart verzweigte Alkohole mit 8 bis 36 Kohlenstoffatomen. Der Verzweigungsgrad beträgt mindestens 0,7 und bevorzugt 1,5 bis 2,3, wobei weniger als 0,5% quartäre Kohlenstoffatome anwesend sind, und die Verzweigungen Methyl- und Ethylgruppen umfassen. Beschrieben wird weiterhin die Weiterverarbeitung der Alkohole zu entsprechenden Tensiden und zwar Alkoxylaten, Sulfaten oder Alkoxysulfaten.

In EP 003 183 B1 werden Tenside der allgemeinen Formel R-O-Polypropoxy-Polyethoxy-X, wobei X eine Sulfat-, Sulfonat, Phosphat oder Karbonsäuregruppe ist, beschrieben. Bei R handelt es sich in einer bevorzugten Ausführungsform um einen verzweigten Alkylrest mit 10 bis 16 Kohlenstoffatomen, beispielsweise um einen Isotridecylrest.

US 4 886 120 A offenbart ein Verfahren zur Erdölförderung mittels Steigerung der Injektivität von Injektionsbohrungen bei der Erdölgewinnung durch Injektion von Meerwasser, das Ethersulfatanionen mit C12-C15 Alkylrest der Formel $RO(C_3H_6O)_7(C_2H_4O)_2SO_4$ enthält.

EP 0 207 312 A2 beschreibt Verfahren zur Gewinnung von Öl aus unterirdischem Speichergestein mit Hilfe eines carboxymethylierten Oxalkylates als Mischung mit einem hydrophoberen Tensid.

GB 2 169 894 A beschreibt oberflächenaktive Verbindungen mit einer hydrophoben und zwei bis sechs hydrophilen Gruppen und Mikroemulsionen diese enthaltend.

US 4 265 264 A beschreibt zur Viskositätsverbesserung beim Transport von Kohlenwasserstoffen die Verwendung einer Kombination aus ethoxyliertem Alkoholsulfat mit bestimmten PO/EO-Blockpolymeren oder ethoxylierten Alkoholen.

US 4,395,364 A beschreibt eine Detergenszusammensetzung, die ein Sulfonatbasiertes Tensid sowie ein Alkylethersulfat mit PO- und/oder BuO-Einheiten enthält.

US 3 843 706 A beschreibt ein bioabbaubares Detergens mit langkettigen Etheralkoholen sowie PO- und BuO-enthaltenden Alkoholsulfaten.

GB 2 054 635 A beschreibt eine Detergenszusammensetzung, enthaltend ein kationisches Tensid sowie ein Alkyl- oder Alkenylethersulfat mit PO- oder BuO-Gruppen.

US 4 842 067 A beschreibt ein Verfahren zur verbesserten Erdölförderung mit Hilfe einer Mischung aus eher leicht löslichen und nur etwas löslichen Sulfonaten.

US 4 485 873 A beschreibt ein Verfahren zur Erdölförderung mit Hilfe von zwischen 10 und 100% carboxymethylierten Ethoxylaten.

Die Einsatzparameter, wie beispielsweise Art, Konzentration und das Mischungsverhältnis der eingesetzten Tenside zueinander werden daher vom Fachmann an die in einer gegebenen Ölformation vorherrschenden Bedingungen (beispielsweise Temperatur und Salzgehalt) angepasst.

Wie zuvor beschrieben ist die Erdölproduktion proportional zur Kapillarzahl. Diese ist umso höher je niedriger die Grenzflächenspannung zwischen Öl und Wasser ist. Niedrige Grenzflächenspannungen sind umso schwieriger zu erreichen je höher die mittlere Anzahl an Kohlenstoffatomen im Rohöl ist.

Für niedrige Grenzflächenspannungen sind Tenside geeignet, welche über einem langen Alkylrest verfügen. Je länger der Alkylrest ist, desto besser lassen sich die Grenzflächenspannungen reduzieren. Jedoch ist die Verfügbarkeit solcher Verbindungen sehr eingeschränkt und diese Verbindungen werden zunehmend schlecht wasserlöslich.

Aufgabe der Erfindung ist es daher, ein besonders effizientes und lösliches Tensid für den Einsatz zum Tensidfluten bzw. bevorzugt Winsor Typ III Mikroemulsionsfluten, sowie ein verbessertes Verfahren zur tertiären Erdölförderung bereitzustellen.

Dementsprechend wird eine wässrige Tensidformulierung für die Erdölförderung bereitgestellt, wobei die wässrige Tensidformulierung mindestens ein ionisches Tensid der allgemeinen Formel

$$R^1\text{-O-}(CH_2CH(CH_3)O)_m(CH_2CH_2O)_n\text{-}XY^-\,M^+,$$

wobei

R$^1$ für einen unverzweigten gesättigten oder ungesättigten geradkettigen aliphatischen Kohlenwasserstoffrest mit 16 bis 18 Kohlenstoffatomen steht,
n für eine Zahl von 0 bis 99 steht,
m eine Zahl von 3 bis 20 ist,
wobei die Summe von n und m im Bereich von 3 bis 99 liegt,
Y$^-$ ausgewählt ist aus der Gruppe von Sulfatgruppen, Sulfonatgruppen, Carboxylatgruppen und Phosphatgruppen,
X eine Methylen-, Ethylen- oder Propylengruppe ist, und
M$^+$ ein Kation ist

umfasst und weiterhin Butyldiethylenglykol als zusätzliches Lösungsmittel enthält.

Zu der Erfindung ist im Einzelnen das Folgende aufzuführen.

Die wie vorstehend beschriebene erfindungsgemäße wässrige Tensidformulierung kann in einem Verfahren zur Erdölförderung mittels Winsor Typ III Mikroemulsionsflutens eingesetzt werden, wobei die wässrige Tensidformulierung mindestens ein Tensid der allgemeinen Formel und Butyldiethylenglykol als zusätzliches Lösungsmittel enthält. Sie kann darüber hinaus noch weitere Tenside und/oder andere Komponenten umfassen.

Im Rahmen des Verfahrens zur tertiären Erdölförderung mittels Winsor Typ III Mikroemulsionsflutens, wird durch die Verwendung des Tensids in der erfindungsgemäßen Tensidformulierung die Grenzflächenspannung zwischen Öl und Wasser auf Werte <0,1 mN/m, bevorzugt auf < 0,05 mN/m, besonders bevorzugt auf < 0,01 mN/m abgesenkt wird. Somit wird die Grenzflächenspannung zwischen Öl und Wasser auf Werte im Bereich von 0,1 mN/m bis 0,0001 mN/m, bevorzugt auf Werte im Bereich von 0,05 mN/m bis 0,0001 mN/m, besonders bevorzugt auf Werte im Bereich von 0,01 mN/m bis 0,0001 mN/m abgesenkt.

Das mindestens eine Tensid lässt sich unter der allgemeinen Formel $R^1\text{-O-}(CH_2CH(CH_3)O)_m(CH_2CH_2O)_n\text{-}XY^-M^+$ subsumieren. Es können in der Tensidformulierung auch mehrere verschiedene Tenside der allgemeinen Formel vorhanden sein.

Bei dem Rest R$^1$ handelt es sich um einen unverzweigten gesättigten oder ungesättigten geradkettigen aliphatischen Kohlenwasserstoffrest mit 16 bis 18 Kohlenstoffatomen, der bevorzugt gesättigt ist.

In obiger allgemeiner Formel steht n für eine Zahl von 0 bis 99, bevorzugt 0 bis 19, besonders bevorzugt 0 bis 10.

In obiger allgemeiner Formel steht m für eine Zahl von 3 bis 20, bevorzugt 5 bis 11.

Gemäß der Erfindung ist die Summe n + m eine Zahl im Bereich von 3 bis 99, bevorzugt im Bereich von 3 bis 39, besonders bevorzugt im Bereich von 5 bis 15.

Gemäß einer bevorzugten Ausführungsform der Erfindung ist m größer als n, das bedeutet, dass das Propylenoxyd mehr als 50% des gesamten Alkylenoxyds (Summe aus n und m) ausmacht.

In der oben definierten allgemeinen Formel stehen n und m für Ganzzahlen. Für den Fachmann auf dem Gebiet der Polyalkoxylate ist klar, dass es sich bei dieser Definition um die Definition eines einzelnen Tensids handelt. Im Falle des Vorliegens von Tensidformulierungen, die mehrere Tenside der allgemeinen Formel umfassen, handelt es sich bei den Zahlen x und m um Mittelwerte über alle Moleküle der Tenside, da bei der Alkoxylierung von Alkohol mit Ethylenoxyd bzw. Propylenoxyd eine gewisse Verteilung von Kettenlängen erhalten wird. Diese Verteilung kann in prinzipiell bekannter Art und Weise durch die so genannte Polydispersität D beschrieben werden. Bei $D = M_w/M_n$ handelt es sich um den Quotienten aus dem Gewichtsmittel der molaren Masse und dem Zahlenmittel der molaren Masse. Die Polydispersität kann mittels dem Fachmann bekannten Methoden ermittelt werden, beispielsweise mittels Gelpermeationschromatographie.

Gemäß der Erfindung sind die Ethylenoxid- und Propylenoxidgruppe statistisch verteilt, alternierend verteilt oder liegen in Form zweier oder mehrerer Blöcke in beliebiger Reihenfolge vor. Besonders bevorzugt ist, dass bei Vorliegen beider Alkylenoxide im Tensid die Alkylenoxide zu >80% in Blockform angeordnet sind, der Propylenoxidblock direkt an den zuvor beschriebenen $R^1$-O geknüpft ist.

In obiger allgemeiner Formel steht X für eine Methylen-, Ethylen- oder Propylengruppe.

In obiger allgemeiner Formel steht Y für eine Sulfonat-, Sulfat-, Carboxylatgruppe oder Phosphatgruppe. Gemäß einer bevorzugten Ausführungsform der Erfindung ist $Y^-$ eine Sulfatgruppe. Die ionische Gruppe Y kann beispielsweise mittels Sulfatierung an das Alkoholalkoxylat angefügt werden.

In obiger Formel steht $M^+$ für ein Kation, bevorzugt für ein Kation ausgewählt aus der Gruppe $Na^+$; $K^+$, $Li^+$, $NH_4^+$, $H^+$, $Mg^{2+}$ und $Ca^{2+}$.

Die Tenside gemäß der allgemeinen Formel können in prinzipiell bekannter Art und Weise durch Alkoxylierung von entsprechenden Alkoholen $R^1$-OH hergestellt werden.

Die Durchführung von Alkoxylierungen ist dem Fachmann prinzipiell bekannt. Es ist dem Fachmann ebenfalls bekannt, dass man durch die Reaktionsbedingungen, insbesondere die Wahl des Katalysators, die Molgewichtsverteilung der Alkoxylate beeinflussen kann.

Die Tenside gemäß der allgemeinen Formel können bevorzugt durch basenkatalysierte Alkoxylierung hergestellt werden. Dabei kann der Alkohol $R^1$-OH in einem Druckreaktor mit Alkalimetallhydroxiden, bevorzugt Kaliumhydroxid oder mit Alkalialkoholaten, wie beispielsweise Natriummethylat, versetzt werden. Durch verminderten Druck (beispielsweise < 100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (zum Beispiel Stickstoff) inertisiert und das oder die Alkylenoxid(e) bei Temperaturen von 60 bis 180°C bis zu einem Druck von max. 10 bar schrittweise zugegeben. Bevorzugt wird zuerst Propylenoxid zugegeben, um einen Alkyloxypropylenether zu erhalten, der anschließend mit dem Ethylenoxid umgesetzt wird. Am Ende der Reaktion kann der Katalysator durch Zugabe von Säure (zum Beispiel Essigsäure oder Phosphorsäure) neutralisiert werden und wird bei Bedarf abfiltriert.

Die Alkoxylierung der Alkohole $R^1$-OH kann aber auch mittels anderer Methoden vorgenommen werden, beispielsweise durch säurenkatalysierte Alkoxylierung. Weiterhin können beispielsweise Doppelhydroxidtone wie in DE 432 523 7 A1 beschrieben, eingesetzt werden, oder es können Doppelmetallcyanidkatalysatoren (DMC-Katalysatoren) verwendet werden. Geeignete DMC-Katalysatoren sind beispielsweise in der DE 102 43 361 A1, insbesondere in den Abschnitten [0029] bis [0041] sowie der darin zitierten Literatur offenbart. Beispielsweise können Katalysatoren vom Zn-Co-Typ eingesetzt werden. Zur Durchführung der Reaktion kann der Alkohol $R^1$OH mit dem Katalysator versetzt, die Mischung wie oben beschrieben entwässert und mit den Alkylenoxiden wie beschrieben umgesetzt werden. Es werden üblicherweise nicht mehr als 1000 ppm Katalysator bezüglich der Mischung eingesetzt und der Katalysator kann aufgrund dieser geringen Menge im Produkt verbleiben. Die Katalysatormenge kann in der Regel geringer sein als 1000 ppm, beispielsweise 250 ppm, oder weniger.

Die anionische Gruppe wird abschließend eingeführt. Dies ist dem Fachmann prinzipiell bekannt. Im Falle einer Sulfatgruppe kann man beispielsweise auf die Umsetzung mit Schwefelsäure, Chlorsulfonsäure oder Schwefeltrioxid im Fallfilmreaktor mit nachfolgender Neutralisierung zurückgreifen. Im Falle einer Sulfonatgruppe kann man beispielsweise auf die Umsetzung mit Propansulton und nachfolgender Neutralisierung, mit Butansulton und nachfolgender Neutralisierung, mit Vinylsulfonsäure Natriumsalz oder mit 3-Chloro-2-hydroxy-propansulfonsäure Natriumsalz zurückgreifen. Im Falle einer Carboxylatgruppe kann man beispielsweise auf die Oxidation des Alkohols mit Sauerstoff und nachfolgender Neutralisierung bzw. die Umsetzung mit Chloressigsäurenatriumsalz zurückgreifen.

Weitere Tenside

Neben den Tensiden gemäß der allgemeinen Formel kann die erfindungsgemäße wässrige Formulierung darüber hinaus optional noch weitere Tenside umfassen. Dies sind zum Beispiel anionische Tenside des Typus Alkylarylsulfonat oder Olefinsulfonat (alpha-Olefinsulfonat oder internes Olefinsulfonat) und/oder nichtionische Tenside des Typus Alkylethoxylat oder Alkylpolyglucosid. Bei diesen weiteren Tensiden kann es sich insbesondere auch um oligomere oder polymere Tenside handeln. Mit derartigen polymeren Co-Tensiden lässt sich vorteilhaft die zur Bildung einer Mikroemulsion notwendige Menge an Tensiden reduzieren. Derartige polymere Co-Tenside werden daher auch als "Mikroemulsionsbooster" bezeichnet. Beispiele derartiger polymerer Tenside umfassen amphiphile Block-Copolymere, die mindestens einen hydrophilen und mindestens einen hydrophoben Block umfassen. Beispiele umfassen Polypropylenoxid-Polyethylenoxid-Block-Copolymere, Polyisobuten-Polyethylenoxid-Block-Copolymere sowie Kammpolymere mit Polyethylenoxid-Seitenketten und einer hydrophoben Hauptkette, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu derartigen Tensiden sind in WO 2006/131541 A1 offenbart.

Verfahren zur Erdölförderung

Bei dem Verfahren zur Erdölförderung wird eine erfindungsgemäße wässrige Formulierung durch mindestens eine Injektionsbohrung in die Erdöllagerstätte eingepresst und der Lagerstätte wird durch mindestens eine Produktionsbohrung Rohöl entnommen. Mit dem Begriff "Rohöl" ist in diesem Zusammenhang selbstverständlich nicht phasenreines Öl gemeint, sondern gemeint sind die üblichen Rohöl-Wasser-Emulsionen. In der Regel wird eine Lagerstätte mit mehreren Injektionsbohrungen und mit mehreren Produktionsbohrungen versehen. Die Hauptwirkung des Tensides liegt in der Reduzierung der Grenzflächenspannung zwischen Wasser und Öl - wünschenswerterweise auf Werte deutlich <0,1 mN/m. Im Anschluss an das Einpressen der Tensidformulierung, dem so genannten "Tensidfluten" bzw. bevorzugten Winsor Typ III Mikroemulsionsfluten, kann zur Aufrechterhaltung des Drucks Wasser in die Formation injiziert werden ("Wasserfluten") oder bevorzugt eine höher viskose wässrige Lösung eines stark verdickend wirkenden Polymers ("Polymerfluten"). Es sind aber auch Techniken bekannt, nach denen man die Tenside zunächst einmal auf die Formation einwirken lässt. Eine weitere bekannte Technik ist die Injektion einer Lösung aus Tensiden und verdickend wirkenden Polymeren gefolgt von einer Lösung aus verdickend wirkendem Polymer. Dem Fachmann sind Einzelheiten zur technischen Durchführung des "Tensidflutens", "Wasserflutens" und des "Polymerflutens" bekannt und er wendet je nach Art der Lagerstätte eine entsprechende Technik an.

Für das Verfahren wird eine erfindungsgemäße wässrige Formulierung eingesetzt. Neben Wasser enthält die erfindungsgemäße Formulierung Butyldiethylenglykol und es können optional auch noch weitere mit Wasser mischbare oder zumindest in Wasser dispergierbare organische oder sonstige Mittel umfasst sein. Derartige Zusätze dienen insbesondere zur Stabilisierung der Tensidlösung während der Lagerung beziehungsweise des Transports zum Ölfeld. Die Menge der Lösungsmittel sollte aber im Regelfall 50 Gew.-%, bevorzugt 20 Gew.-% nicht überschreiten. Beispiele weiterer mit Wasser mischbarer Lösungsmittel umfassen insbesondere Alkohole wie Methanol, Ethanol und Propanol, Butanol, sek-Butanol, Pentanol, Butylethylenglykol, oder Butyltriethylenglykol.

Vorzugsweise beträgt der Anteil der Tenside gemäß der allgemeinen Formel mindestens 30 Gew.-% bezüglich des Anteils aller vorhandenen Tenside, also den Tensiden gemäß der allgemeinen Formel sowie optional vorhandene Tenside. Bevorzugt beträgt der Anteil mindestens 50 Gew.-%.

Die erfindungsgemäß verwendete Formulierung kann bevorzugt zum Tensidfluten von Lagerstätten eingesetzt werden. Sie eignet sich insbesondere zum Winsor Typ III Mikroemulsionsfluten (Fluten im Winsor III-Bereich bzw. im Existenzgebiet der bikontinuierlichen Mikroemulsionsphase). Die Technik des Winsor Typ III Mikroemulsionsflutens wurde bereits eingangs ausführlich beschrieben.

Neben den Tensiden können die erfindungsgemäßen Formulierungen auch noch weitere Komponenten enthalten, wie beispielsweise $C_4$- bis $C_8$-Alkohole und/oder basische Salze (sogenanntes "alkali surfactant flooding"). Mit derartigen Zusätzen kann beispielsweise die Retention in der Formation reduziert werden. Das Mengenverhältnis der Alkohole bezüglich der eingesetzten Gesamt-Tensidmenge beträgt in der Regel mindestens 1:1 - es kann jedoch auch ein deutlicher Überschuss an Alkohol verwendet werden. Die Menge an basischen Salzen kann typischerweise von 0,1 Gew.-% bis 5 Gew.-% reichen.

Die Lagerstätten in denen das Verfahren mit Hilfe der erfindungsgemäßen Formulierung angewandt wird, weisen in der Regel eine Temperatur von mindestens 10°C, beispielsweise 10 bis 150°C auf, bevorzugt eine Temperatur von mindestens 15°C bis 120°C. Die Gesamtkonzentration aller Tenside zusammen beträgt 0,05 bis 5 Gew.-% bezüglich der Gesamtmenge der wässrigen Tensidformulierung, bevorzugt 0,1 bis 2,5 Gew.-%. Der Fachmann trifft je nach den gewünschten Eigenschaften, insbesondere je nach den Verhältnissen in der Erdölformation, eine geeignete Auswahl. Für den Fachmann ist hierbei klar, dass sich die Konzentration der Tenside nach dem Injizieren in die Formation ändern kann, weil sich die Formulierung mit Formationswasser vermischen kann oder Tenside auch an festen Oberflächen der Formation absorbieren können. Es ist der große Vorteil der erfindungsgemäß verwendeten Mischung, dass die Tenside zu einer besonders guten Grenzflächenspannungserniedrigung führen.

Es ist selbstverständlich möglich und auch empfehlenswert, zunächst ein Konzentrat herzustellen, das erst vor Ort auf die gewünschte Konzentration zum Injizieren in die Formation verdünnt wird. In der Regel beträgt die Gesamtkonzentration der Tenside in einem solchen Konzentrat 10 bis 45 Gew.-%.

Die nachfolgenden Beispiele sollen die Erfindung näher erläutern:

Teil I: Synthese der verwendeten Tenside

Allgemeine Vorschrift 1: Alkoxylierung mittels KOH-Katalyse

In einem 2l Autoklaven wird der zu alkoxylierende Alkohol (1,0 eq) mit einer wässrigen KOH-Lösung, die 50 Gew.-% KOH enthält, versetzt. Dabei beträgt die Menge an KOH 0,2 Gew.-% des herzustellenden Produktes. Unter Rühren wird die Mischung bei 100°C und 20 mbar für 2 h entwässert. Anschließend wird dreimal mit $N_2$ gespült, ein Vordruck von ca. 1,3 bar $N_2$ eingestellt und die Temperatur auf 120 bis 130°C erhöht. Das Alkylenoxid wird so zudosiert, dass die Temperatur zwischen 125°C bis 135°C (bei Ethylenoxid) bzw. 130 bis 140°C (bei Propylenoxid) bleibt. Anschließend wird 5 h bei 125 bis 135°C nachgerührt, mit $N_2$ gespült, auf 70°C abgekühlt und der Reaktor entleert. Das basische Rohprodukt wird mit Hilfe von Essigsäure neutralisiert. Alternativ kann die Neutralisierung auch mit handelsüblichen Mg-Silikaten erfolgen, welche anschließend abfiltriert werden. Das helle Produkt wird mit Hilfe eines 1H-NMR-Spektrums in CDCl3, einer Gelpermeationschromatographie sowie einer OH-Zahl-Bestimmung charakterisiert und die Ausbeute ermittelt.

Allgemeine Vorschrift 2: Sulfatierung mittels Chlorsulfonsäure

In einem 1l Rundhalskolben wird das zu sulfatierende Alkylalkoxylat (1,0 eq) in der 1,5 fachen Menge Dichlormethan (auf Basis von Gewichtsprozent) gelöst und auf 5 bis 10°C abgekühlt. Danach wird Chlorsulfonsäure (1,1 eq) so zugetropft, dass die Temperatur nicht 10°C übersteigt. Man lässt auf Raumtemperatur erwärmen und 4 h bei dieser Temperatur unter $N_2$-Strom rühren, bevor obiges Reaktionsgemisch in eine wässrige NaOH-Lösung mit halbem Volumen bei max. 15°C getropft wird. Die NaOH-Menge ist so berechnet, dass sich ein leichter Überschuss bezüglich der verwendeten Chlorsulfonsäure ergibt. Der resultierende pH-Wert liegt bei ca. 9 bis 10. Das Dichlormethan wird unter leichtem Vakuum am Rotationsverdampfer bei max. 50°C entfernt. Das Produkt wird per 1H-NMR charakterisiert und der Wassergehalt der Lösung bestimmt (ca. 70%).

Für die Synthese wurden die nachfolgenden Alkohole eingesetzt:

| Alkohol | Beschreibung |
|---|---|
| $C_{16}C_{18}$ | Kommerziell erhältliches Fettalkoholgemisch bestehend aus linearem $C_{16}H_{33}$-OH und $C_{18}H_{37}$-OH |
| $C_{14}$ | Kommerziell erhältlicher linearer Alkohol $C_{14}H_{29}$-OH |
| $C_{20}$ | Kommerziell erhältlicher linearer Alkohol $C_{20}H_{41}$-OH |

Die Alkohole wurde jeweils gemäß Vorschrift 1 alkoxyliert, der jeweilige Alkoxylierungsgrad in den Tabellen 1 bis 3 zusammengefasst.

Teil II: Anwendungstechnische Tests

Mit den erhaltenen Tensiden wurden die folgenden Tests durchgeführt, um deren Eignung zur tertiären Erdölförderung zu bewerten.

Beschreibung der Messmethoden

a.) Löslichkeit

In einem salinen Injektionswasser bzw. Produktionswasser einer Lagerstätte wird bei Raumtemperatur ein Alkylalkoxysulfat gelöst (Gesamtkonzentration 500 bis 3000 ppm) und mit NaOH (1000 bis 15000 ppm) sowie optional einem Chelatbildner wie zum Beispiel EDTA versetzt. Optional wurde Butyldiethylenglycol (BDG) zugegeben. Anschließend wird die Lösung auf die Lagerstättentemperatur gebracht. Nach 24 h wird die Formulierung optisch begutachtet und nur beim Vorliegen einer klaren Lösung weiterverwendet. Das Injektionswasser der betrachteten Lagerstätte wies eine Salinität von 11250 ppm TDS (total dissolved salt) auf. Die Lagerstättentemperatur betrug 32°C.

b.) Grenzflächenspannung

Des Weiteren wurden Grenzflächenspannungen direkt per spinning drop Verfahren an einem toten Rohöl (API ca. 14) und dem salinen Originalinjektionswasser bei Lagerstättentemperatur von 32°C gemessen. Hierzu verwendete man die unter a) hergestellte Tensidlösung. In diese klare Lösung wurde bei Lagerstättentemperatur ein Öltropfen gegeben und die Grenzflächenspannung nach 2 h abgelesen.

c.) Ermittlung von SP*

Prinzip der Messung:

Die Grenzflächenspannung zwischen Wasser und Öl wurde in bekannter Art und Weise über die Messung des Solubilisationsparameters SP* bestimmt. Die Bestimmung der Grenzflächenspannung über die Bestimmung des Solubilisationsparameters SP* ist eine in der Fachwelt akzeptierte Methode zur näherungsweisen Bestimmung der Grenzflächenspannung. Der Solubilisationsparameter SP* gibt an, wie viel ml Öl pro ml eingesetztem Tensid in einer Mikroemulsion (Windsor Typ III) gelöst ist. Die Grenzflächenspannung $\sigma$ (interfacial tension; IFT) kann hieraus über die Näherungsformel IFT $\approx 0.3/(SP^*)^2$ errechnet werden, falls gleiche Volumina von Wasser und Öl eingesetzt werden. (C. Huh, J. Coll. Interf. Sc., Vol. 71, No. 2 (1979)).

Arbeitsvorschrift

Zur Bestimmung des SP* wird ein 100 ml Messzylinder mit Magnetrührfisch mit 20 ml Öl und 20 ml Wasser befüllt. Dazu werden die Konzentrationen der jeweiligen Tenside gegeben. Anschließend wird die Temperatur von 20 auf 90°C schrittweise erhöht, und es wird beobachtet, in welchem Temperaturfenster sich eine Mikroemulsion bildet.
Die Ausbildung der Mikroemulsion kann visuell beobachtet werden oder auch mit Hilfe von Leitfähigkeitsmessungen. Es bildet sich ein Dreiphasensystem aus (obere Phase Öl, mittlere Phase Mikroemulsion, untere Phase Wasser). Sind obere und untere Phase gleich groß und verändern sich über einen Zeitraum von 12 h auch nicht mehr, so hat man die optimale Temperatur ($T_{opt}$) der Mikroemulsion gefunden. Das Volumen der mittleren Phase wird bestimmt. Von diesem Volumen wird das Volumen an zugegebenem Tensid abgezogen. Der erhaltene Wert wird danach durch zwei geteilt. Dieses Volumen wird nun durch das Volumen an zugegebenem Tensid geteilt. Das Ergebnis wird als SP* notiert.
Die Art der zur Bestimmung von SP* eingesetzten Öls und Wassers wird je nach dem zu untersuchenden System bestimmt. Es kann einerseits Erdöl selbst eingesetzt werden, oder auch ein Modellöl wie beispielsweise Decan. Als Wasser kann sowohl reines Wasser eingesetzt werden, wie auch salines Wasser, um die Verhältnisse in der Erdölformation besser zu modellieren. Die Zusammensetzung der wässrigen Phase kann beispielsweise entsprechend der Zusammensetzung eines bestimmten Lagerstättenwassers eingestellt werden.
Angabe zu der verwendeten wässrigen Phase und der Ölphase finden sich unten bei der konkreten Beschreibung der Versuche.

Testergebnisse

Tenside auf Basis von linearem $C_{16}C_{18}$-Fettalkohol wurden eingesetzt. Zum Vergleich wurden Tenside auf Basis der linearen Alkohole $C_{20}$ und $C_{14}$ gewählt. Es wurde eine 1:1 Mischung aus Decan und einer NaCl-Lösung mit Butyldiethylenglykol (BDG) versetzt. Butyldiethylenglykol (BDG) fungiert als Cosolvenz und wird in die Berechnung von SP* nicht miteinbezogen. Dazu wurde eine Tensidmischung aus 3 Teilen Alkylalkoxysulfat und 1 Teil Dodecylbenzolsulfonat (Lutensit A-LBN 50 ex BASF) gegeben. Die Gesamt-Tensidkonzentration ist in Gewichtsprozent des Gesamtvolumens angegeben.
Des Weiteren wurden Grenzflächenspannungen direkt per spinning drop Verfahren an einem toten Rohöl (API ca. 14) und einem salinen Originalinjektionswasser mit 11250 ppm TDS (total dissolved salt) bei Lagerstättentemperatur von 32°C gemessen. Hierzu versetzte man das Originalinjektionswasser mit 1000 ppm Tensid, 500 ppm BDG, 300 ppm Chelatbildner und 3500 ppm NaOH. In diese klare Lösung wurde bei 32°C ein Öltropfen gegeben und die Grenzflächenspannung nach 2 h abgelesen. Die Ergebnisse sind in Tabelle 1 bis 3 dargestellt.

Tabelle 1

| Bsp. | Alkyl - AO - SO$_4$Na: C$_{12}$H$_{25}$Ph-SO$_3$Na = 3:1 | Tensid [%] | BDG [%] | NaCl [%] | Topt [°C] | SP* | IFT [mN/m] |
|---|---|---|---|---|---|---|---|
| V1 | C$_{20}$ - 7 PO - SO$_4$Na | 2.5 | 2 | 4 | 58 | 14.8 | 0,0014 |
| V2 | C$_{14}$ - 7 PO - SO$_4$Na | 2.5 | 2 | 7 | 58 | 7.3 | 0,0056 |
| 3 | C$_{16}$C$_{18}$ - 7 PO - SO$_4$Na | 2.5 | 2 | 4 | 60 | 17.8 | 0,0009 |
| 4 | C$_{16}$C$_{18}$ - 9 PO - SO$_4$Na | 2.5 | 2 | 4 | 67 | 17.8 | 0,0009 |

Wie in Tabelle 1 zu sehen, liefern erstaunlicherweise die C$_{16}$C$_{18}$-basierten Verbindungen die höchsten SP*-Werte und damit die niedrigsten Grenzflächenspannungen. Um einen Einfluss der Temperatur auszuschließen, wurde zunächst bei gleicher optimaler Temperatur (Ausbildung einer balancierten Mikroemulsion Winsor Typ III) verglichen. Wie zu erwarten, liefert Vergleichsbeispiel V2 eine höhere Grenzflächenspannung als Beispiel 3. Dies steht in Einklang mit der Literatur. Eine Verlängerung des linearen Alkylrestes über C$_{18}$ hinaus zeigt erstaunlicherweise bereits am einfachen Modellöl Dekan seine Unterschiede (Vergleichsbeispiel V1 im Vergleich zu Beispiel 3 und 4). Bei V1 wird die Grenzflächenspannung nicht weiter erniedrigt, sondern erhöht. Aus der Literatur ist normalerweise zu entnehmen, dass eine Verlängerung des Alkylrestes zu einer niedrigeren Grenzflächenspannung führt. Dies ist aber nicht der Fall.

Tabelle 2

| Bsp | Alkyl - AO - SO$_4$Na [1000 ppm] | BDG [ppm] | NaOH [ppm] | Chelat [ppm] | Salinität [ppm] | T [°C] | Löslichkeit |
|---|---|---|---|---|---|---|---|
| 1 | C$_{16}$C$_{18}$ - 7 PO - SO$_4$Na | 500 | 3500 | 300 | 11250 | 32 | klar |
| 2 | C$_{16}$C$_{18}$ - 7 PO - SO$_4$Na | 500 | 6500 | 300 | 11250 | 32 | klar |
| V3 | C$_{20}$ - 7 PO - SO$_4$Na | 500 | 3500 | 300 | 11250 | 32 | trüb homoge n |
| V4 | C$_{14}$ - 7 PO - SO$_4$Na | 500 | 3500 | 300 | 11250 | 32 | klar |
| 5 | C$_{16}$C$_{18}$ - 6 PO - SO$_4$Na | 500 | 3500 | 300 | 11250 | 32 | klar |
| V6 | C$_{20}$ - 6 PO - SO$_4$Na | 500 | 3500 | 300 | 11250 | 32 | klar |
| V7 | C$_{20}$ - 9 PO - SO$_4$Na | 500 | 5000 | 300 | 11250 | 32 | klar |

Im salinen Injektionswasser sind fast alle dargestellten Tensidformulierungen bei Raumtemperatur und Lagerstättentemperatur von 32°C klar gelöst (Tabelle 2). Eine Ausnahme stellt V3 mit C$_{20}$ - 7 PO - Sulfat dar. Hier lag eine trübe, aber homogene Lösung vor. Dies kann im Laufe der Zeit in einer porösen Matrix zu Ablagerungen und Verstopfungen der feinen Kanäle führen. Die fehlende Verzweigung im Alkylrest bei den anderen Beispielen erweist sich nicht als Nachteil. In der Literatur wird im Allgemeinen auf den Vorteil einer Verzweigung hingewiesen. Dadurch verbessert sich zum Beispiel die Löslichkeit beziehungsweise der Krafft-Punkt eines Tensids sinkt herab. Tenside auf Basis linearer Alkohole haben durch die Kombination mit Propylenoxid keine Nachteile in der Löslichkeit.

Tabelle 3

| Bsp | Alkyl - AO - SO$_4$Na [1000 ppm] | BDG [ppm] | NaOH [ppm] | Chelat [ppm] | Salinität [ppm] | T [°C] | IFT [mN/m] |
|---|---|---|---|---|---|---|---|
| 1 | C$_{16}$C$_{18}$ - 7 PO - SO$_4$Na | 500 | 3500 | 300 | 11250 | 32 | 0,0032 |
| 2 | C$_{16}$C$_{18}$ - 7 PO - SO$_4$Na | 500 | 6500 | 300 | 11250 | 32 | 0,0028 |
| V3 | C$_{20}$ - 7 PO - SO$_4$Na | 500 | 3500 | 300 | 11250 | 32 | 0,0604 |
| V4 | C$_{14}$ - 7 PO - SO$_4$Na | 500 | 3500 | 300 | 11250 | 32 | 0,0373 |
| 5 | C$_{16}$C$_{18}$ - 6 PO - SO$_4$Na | 500 | 3500 | 300 | 11250 | 32 | 0,0053 |
| V6 | C$_{20}$ - 6 PO - SO$_4$Na | 500 | 3500 | 300 | 11250 | 32 | 0,0340 |
| V7 | C$_{20}$ - 9 PO - SO$_4$Na | 500 | 5000 | 300 | 11250 | 32 | 0,0611 |

Wie in Tabelle 3 zu sehen, liefern die Tenside auf Basis linearer Alkohole gegenüber dem Rohöl unterschiedliche Grenzflächenspannungen. Beispiel 1 und Beispiel 2 liefern auch bei Variation der NaOH-Menge (und damit einer Veränderung der Salinität sowie einer veränderten Mobilisierung von Naphthensäuren als natürliche Tenside) hervorragende Grenzflächenspannungen von rund $3\times10^{-3}$ mN/m. Auch eine Variation des Propoxilierungsgrades (Beispiel 5) zeigt nur eine geringe Änderung der guten Grenzflächenspannungswerte. Sie steigt auf $5\times10^{-3}$ mN/m. Vergleicht man dies mit einem Tensid auf Basis des linearen $C_{20}$-Alkohols (V6 und V7), so stellt man fest, dass die Grenzflächenspannungen deutlich höher sind (mit $3\text{-}6\times10^{-2}$ mN/m fast eine Größenordnung höher). Auch ein Tensid mit einem kürzeren Alkylteil ($C_{14}$) liefert, wie an V4 zu sehen, keine besseren Grenzflächenspannungswerte.

**Patentansprüche**

1. Wässrige Tensidformulierung für die Erdölförderung, umfassend mindestens ein ionisches Tensid der allgemeinen Formel

$$R^1\text{-O-}(CH_2CH(CH_3)O)_m(CH_2CH_2O)_n\text{-}XY^-\,M^+,$$

wobei

$R^1$ für einen unverzweigten gesättigten oder ungesättigten geradkettigen aliphatischen Kohlenwasserstoffrest mit 16 bis 18 Kohlenstoffatomen steht,
n für eine Zahl von 0 bis 99 steht,
m eine Zahl von 3 bis 20 ist, wobei die Summe von n und m im Bereich von 3 bis 99 liegt,
Y- ausgewählt ist aus der Gruppe von Sulfatgruppen, Sulfonatgruppen, Carboxylatgruppen und Phosphatgruppen,
X eine Methylen-, Ethylen- oder Propylengruppe ist, und
$M^+$ ein Kation ist

und weiterhin Butyldiethylenglykol als zusätzliches Lösungsmittel enthaltend.

2. Wässrige Tensidformulierung gemäß Anspruch 1, wobei $R^1$ für einen unverzweigten gesättigten geradkettigen aliphatischen Kohlenwasserstoffrest mit 16 bis 18 Kohlenstoffatomen steht.

3. Wässrige Tensidformulierung gemäß Anspruch 1 oder 2, wobei Y- ausgewählt aus der Gruppe von Sulfatgruppen, Sulfonatgruppen, Carboxylatgruppen ist.

4. Wässrige Tensidformulierung nach einem der Ansprüche 1 bis 3, wobei bei Vorliegen beider Alkylenoxide im Tensid Ethylenoxid- und Propylenoxidgruppen zu >80% in Form zweier oder mehrerer Blöcke angeordnet sind, wobei der Propylenoxidblock direkt an den $R^1$-O Rest geknüpft ist.

5. Wässrige Tensidformulierung nach einem der Ansprüche 1 bis 4, **dadurch gekennzeichnet, dass** die Konzentration aller Tenside zusammen 0,05 bis 5 Gew. % bezüglich der Gesamtmenge der wässrigen Tensidformulierung beträgt.

6. Wässrige Tensidformulierung nach einem der Ansprüche 1 bis 5, wobei m von 5 bis 11 beträgt.

7. Wässrige Tensidformulierung nach einem der Ansprüche 1 bis 6, wobei m größer n ist.

**Claims**

1. An aqueous surfactant formulation for mineral oil production, comprising at least one ionic surfactant of the general formula

$$R^1\text{-O-}(CH_2CH(CH_3)O)_m(CH_2CH_2O)_n\text{-}XY^-\,M^+$$

where

$R^1$ is an unbranched saturated or unsaturated straight-chain aliphatic hydrocarbon radical having 16 to 18 carbon atoms,

n is from 0 to 99,

m is from 3 to 20,

where the sum of n and m is in the range from 3 to 99,

$Y^-$ is selected from the group of sulfate groups, sulfonate groups, carboxylate groups and phosphate groups,

X is a methylene, ethylene or propylene group, and

$M^+$ is a cation,

and furthermore comprising butyl diethylene glycol as additional solvent.

2. The aqueous surfactant formulation according to claim 1, wherein $R^1$ is an unbranched saturated straight-chain aliphatic hydrocarbon radical having 16 to 18 carbon atoms.

3. The aqueous surfactant formulation according to claim 1 or 2, wherein $Y^-$ is selected from the group of sulfate groups, sulfonate groups and carboxylate groups.

4. The aqueous surfactant formulation according to any of claims 1 to 3, wherein, in the presence of both alkylene oxides in the surfactant, ethylene oxide groups and propylene oxide groups are > 80% arranged in the form of two or more blocks, wherein the propylene oxide block is joined directly to the $R^1$-O radical.

5. The aqueous surfactant formulation according to any of claims 1 to 4, wherein the concentration of all surfactants together is 0.05 to 5% by weight, based on the total amount of the aqueous surfactant formulation.

6. The aqueous surfactant formulation according to any of claims 1 to 5, wherein m is from 5 to 11.

7. The aqueous surfactant formulation according to any of claims 1 to 6, wherein m is greater than n.


**Revendications**

1. Formulation aqueuse de tensioactifs pour l'extraction de pétrole, comprenant au moins un tensioactif ionique de la formule générale :

$$R^1\text{-O- }(CH_2CH(CH_3)O)_m(CH_2CH_2O)_n\text{-XY}^-\ M^+,$$

dans laquelle

$R^1$ représente un radical hydrocarboné aliphatique à chaîne linéaire, saturé ou insaturé, non ramifié, de 16 à 18 atomes de carbone,

n représente un nombre de 0 à 99,

m est un nombre de 3 à 20,

la somme de n et m se situant dans la plage allant de 3 à 99,

$Y^-$ est choisi dans le groupe des groupes sulfate, des groupes sulfonate, des groupes carboxylate et des groupes phosphate,

X est un groupe méthylène, éthylène ou propylène, et

$M^+$ est un cation,

et contenant en outre du butyldiéthylèneglycol en tant que solvant supplémentaire.

2. Formulation aqueuse de tensioactifs selon la revendication 1, dans laquelle $R^1$ représente un radical hydrocarboné aliphatique à chaîne linéaire, saturé, non ramifié, de 16 à 18 atomes de carbone.

3. Formulation aqueuse de tensioactifs selon la revendication 1 ou 2, dans laquelle $Y^-$ est choisi dans le groupe des groupes sulfate, des groupes sulfonate, des groupes carboxylate.

4. Formulation aqueuse de tensioactifs selon l'une quelconque des revendications 1 à 3, dans laquelle, lors de la présence des deux oxydes d'alkylène dans le tensioactif, les groupes oxyde d'éthylène et oxyde de propylène sont agencés à hauteur de > 80 % sous la forme de deux séquences ou plus, la séquence oxyde de propylène étant reliée directement au radical $R^1$-O.

**5.** Formulation aqueuse de tensioactifs selon l'une quelconque des revendications 1 à 4, **caractérisée en ce que** la concentration de tous les tensioactifs ensemble est de 0,05 à 5 % en poids par rapport à la quantité totale de la formulation aqueuse de tensioactifs.

**6.** Formulation aqueuse de tensioactifs selon l'une quelconque des revendications 1 à 5, dans laquelle m est de 5 à 11.

**7.** Formulation aqueuse de tensioactifs selon l'une quelconque des revendications 1 à 6, dans laquelle m est supérieur à n.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5849960 A
- EP 003183 B1
- US 4886120 A
- EP 0207312 A2
- GB 2169894 A
- US 4265264 A
- US 4395364 A
- US 3843706 A
- GB 2054635 A
- US 4842067 A
- US 4485873 A
- DE 4325237 A1
- DE 10243361 A1
- WO 2006131541 A1

**In der Beschreibung aufgeführte Nicht-Patentliteratur**

- *Journal of Petroleum Science of Engineering,* 1998, vol. 19, 265-280
- **C. MELROSE ; C.F. BRANDNER.** *J. Canadian Petr. Techn.,* Oktober 1974, vol. 58
- **C. HUH.** *J. Coll. Interf. Sc.,* 1979, vol. 71 (2